# FASCICULE DE BREVET EUROPEEN

(11) **EP 4 320 342 B1**
(45) Date de publication et mention de la délivrance du brevet: **29.04.2026**
(21) Numéro de dépôt: 22717220.2
(22) Date de dépôt: 23.03.2022
(51) Int. Cl.: F02D 41/24, F02D 41/14

(54) **PROCEDE DE VALIDATION D'UN DIAGNOSTIC DE DEVIATION DE LA RICHESSE SOUS CRITERE DE CONDITIONS SIMILAIRES**
VERFAHREN ZUR VALIDIERUNG EINER DIAGNOSE VON RICHNESS-ABWEICHUNGEN UNTER ÄHNLICHEN BEDINGUNGEN
METHOD FOR VALIDATING A DIAGNOSIS OF RICHNESS DEVIATION UNDER SIMILAR CONDITIONS

(30) Priorité: 09.04.2021 FR 2103656
(43) Date de publication de la demande: 14.02.2024
(73) Titulaire: Stellantis Auto SAS, 78300 Poissy (FR)
(72) Inventeur: POULY, Clement, 92700 COLOMBES (FR)
(74) Mandataire: PSIP
(86) Numéro de dépôt international: PCT/FR2022/050534
(87) Numéro de publication internationale: WO 2022/214747

(56) Documents cités:
- US-A1- 2011 017 176
- US-B2- 10 495 015
- US-B2- 10 612 484
- US-B2- 6 755 176

## Description

Le domaine de l'invention concerne un procédé de validation d'un diagnostic de déviation de la richesse mis en œuvre par une unité de commande d'un moteur thermique.

Les actionneurs de moteurs thermiques de véhicule ont un comportement pouvant différer des modèles de comportements intégrés dans l'unité de contrôle du moteur, du fait des dispersions de fabrication, de l'usure, de l'encrassement et de la qualité de représentation des actionneurs du moteur. Dans le cas des modèles d'actionneurs relatifs à la branche d'admission et la branche d'injection, ce décalage peut amener à des dérives de la richesse du mélange. Cette situation provoque une surconsommation et/ou une augmentation des émissions polluantes. Cela peut entrainer également des impacts sur l'agrément de conduite. Il est nécessaire tout au long de la vie du véhicule de corriger ces dérives de richesse.

Classiquement, cette correction est réalisée par des modèles de contrôle moteur, réalisant la fonction de régulation de richesse, qui corrige en permanence le temps de commande de l'injecteur en se basant sur la mesure de richesse fournie par la sonde de richesse présente à l'échappement. De plus, pour optimiser cette correction, l'unité de commande du moteur exécute en parallèle une fonction d'apprentissage de contrôle moteur en charge de mémoriser la correction nécessaire pour des champs de fonctionnement du moteur. Plus précisément, sur un point stabilisé de champ de fonctionnement moteur, dès que les conditions d'apprentissage sont respectées, la fonction d'apprentissage mémorise pour ce point la valeur de correction déterminée par le modèle de contrôle moteur en charge de la régulation de richesse. Par exemple, le processus d'apprentissage peut se réaliser au moyen d'un réseau de neurones de type auto-adaptatif. Simultanément, l'unité de commande communique la valeur en cours de mémorisation, ce qui a pour effet de faire converger la valeur de correction de régulation de richesse. Ainsi, le travail de régulation est minimisé et on améliore la dynamique de correction.

La fonction d'apprentissage joue un rôle majeur lorsque le modèle de régulation de richesse ne peut pas corriger la richesse, notamment lorsque la sonde de richesse n'est pas disponible, et améliore significativement le contrôle moteur lors de transitoire de charge en minimisant le travail de la fonction de régulation de richesse. On connait le document FR3057031A1 décrivant un procédé de correction de la richesse déposé par la demanderesse. Le procédé décrit est une technique d'optimisation de type minimisation des moindres carrés se basant sur l'analyse des erreurs présentes sur le système afin de déterminer des termes de la fonction de correction et dont le but est de corriger les erreurs en améliorant les modèles. On connait également le document FR2979390A1 décrivant une technique d'optimisation se basant sur un filtre de Kalman.

En outre, l'état de la technique est connu du document US10612484B2.

La réglementation des diagnostics embarqués impose aux constructeurs de surveiller les fonctions d'apprentissage pour alerter le conducteur en cas de survenue d'une défaillance risquant d'entrainer un dépassement des seuils tolérables d'émissions polluantes. Classiquement, le diagnostic de déviation de richesse consiste à contrôler les valeurs prises par les adaptatifs de correction en comparaison de valeurs limites. Par ailleurs, certaines réglementations imposent de complémenter un diagnostic par un mécanisme de validation de fin de défaillance sous critère de conditions similaires, couramment désigné par le terme anglophone « Similar Conditions ».

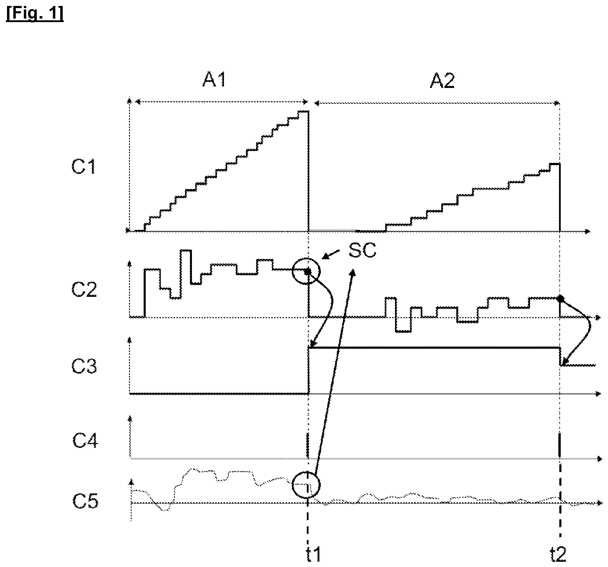

On illustre en figure 1 le principe de ce mécanisme de validation tel que réalisé dans l'état de la technique pour un diagnostic d'une fonction d'apprentissage de la régulation de richesse. Les courbes C1 à C5 sont représentées sur un axe d'abscisse temporel durant lequel interviennent deux phases d'apprentissage A1 et A2 permettant de déterminer respectivement un adaptatif de correction qui sera appliqué par la fonction de régulation de richesse. Sur la courbe C1, en partie supérieure, on a représenté le nombre de mesures de la richesse sur un point de fonctionnement moteur stabilisé. Chaque phase d'apprentissage A1, A2 comprend le calcul d'une série de correctifs temporaires, c'est-à-dire des valeurs intermédiaires non appliquées par la fonction de régulation de richesse, qui sont calculés à partir des mesures de la déviation de la richesse. La valeur de chaque adaptatif de correction issue d'une phase d'apprentissage est illustrée par la courbe C3. La courbe C4 représente les deux instants t1 et t2 de réalisation d'un diagnostic de déviation de la richesse. Chaque diagnostic prend en compte la série de correctifs temporaires pour détecter une défaillance. La courbe C5 représente les valeurs de la déviation de richesse au cours des phases d'apprentissages.

Le principe de validation d'une fin de défaillance sous critère de conditions similaires est le suivant. En cas de détection d'une défaillance pour le premier adaptatif, à l'instant t1, le diagnostic mémorise les paramètres moteurs instantanés, soit les paramètres de l'adaptatif final appliqué par la fonction de régulation. La détection de la défaillance génère l'émission d'une alerte au conducteur et la sélection de ces paramètres moteurs instantanés pour identifier le point de fonctionnement moteur de référence SC utilisé aux fins du mécanisme de validation sous critère de conditions similaires. Ensuite, en fin de la phase d'apprentissage A2, en cas de détection d'une fin de défaillance pour le deuxième adaptatif à l'instant t2, et à condition qu'un point de référence a été mémorisé antérieurement, le diagnostic est autorisé à valider également la fin de défaillance levée pour le premier adaptatif si le test opéré sous critère de conditions similaires avec le point de référence est positif. En particulier, ce test est positif si les différences entre les paramètres moteurs du point de référence SC et les paramètres moteurs du deuxième adaptatif sont inférieures à un seuil donné. Un résultat positif provoque également l'effacement de l'alerte conducteur qui a été générée pour le premier adaptatif.

Ce mécanisme présente des inconvénients de levée de fausses alertes. En effet, il arrive qu'une défaillance déclenchée par un correctif temporaire n'ait au final pas d'impact sur le système et les émissions polluante à l'instant de l'application de l'adaptatif final sur les modèles d'actionneurs. En effet, le point de fonctionnement moteur de l'adaptatif final peut être différent du point de fonctionnement moteur qui a levé l'alerte.

Il existe donc un besoin de palier les problèmes précités. En outre, un objectif de l'invention est de réduire le maintien de fausses alertes concernant la déviation de richesse et d'améliorer le mécanisme de validation sous critère de conditions similaires pour les fonctions de régulation de la richesse utilisant des fonctions d'apprentissage.

Plus précisément, l'invention concerne un procédé de validation d'un diagnostic de déviation de la richesse mis en œuvre par une unité de commande d'un moteur thermique, comportant les étapes suivantes :
- Le pilotage d'une fonction de régulation de la richesse appliquant un adaptatif de correction, où chaque adaptatif de correction est déterminé en fin d'une phase d'apprentissage, chaque phase d'apprentissage se succédant et comprenant le calcul d'une série de correctifs temporaires calculés à partir de mesures de la déviation de la richesse,
- Le diagnostic de déviation de la richesse consistant :
   o En cas de détection d'une défaillance pour un premier adaptatif appliqué par la fonction de régulation, à mémoriser un point de fonctionnement moteur de référence,
   o En cas de détection d'une fin de défaillance pour un deuxième adaptatif, à valider la fin de défaillance du premier adaptatif en fonction d'un test opéré sous critère de conditions similaires avec ledit point de référence.

Selon l'invention, le procédé comporte en outre la sélection dudit point de référence du premier adaptatif parmi la série de correctifs temporaires en fonction de la valeur de déviation de richesse de chaque correctif, et le test sous critère de conditions similaires est opéré en comparant chaque correctif temporaire du deuxième adaptatif avec le point de référence, ce test comportant, pour chaque correctif temporaire du deuxième adaptatif, le calcul de la différence entre le point de référence et le point de fonctionnement de chaque correctif temporaire, et la comparaison de ladite différence par rapport à un seuil prédéterminé.

Selon une variante, la mémorisation du point de référence consiste à enregistrer tout ou partie des paramètres instantanés du moteur parmi le régime moteur, la charge moteur et la température eau moteur.

Plus précisément, selon cette dernière variante, le calcul de la différence de point de fonctionnement consiste à calculer la différence de régime moteur et/ou de charge moteur et/ou de température eau.

Selon une variante, une défaillance est détectée lorsqu'au moins un correctif temporaire d'une série de correctifs présente une déviation de richesse supérieure à une limite prédéterminée.

Selon un premier mode de sélection du point de référence, le procédé comporte en outre l'enregistrement du point de fonctionnement de chaque correctif temporaire durant la phase d'apprentissage, et la sélection dudit point de référence consiste à sélectionner le point de fonctionnement du correctif temporaire présentant la déviation de richesse la plus élevée parmi les dits correctifs temporaires.

Selon un deuxième mode de sélection du point de référence :
- Durant la phase d'apprentissage pour chaque correctif temporaire, la comparaison des valeurs de déviation de la richesse du correctif courant et du correctif précédent de ladite série, et l'enregistrement du point de fonctionnement du correctif ayant la déviation de richesse la plus élevée dans une variable temporaire,
- En fin de ladite phase d'apprentissage, en cas de détection d'une défaillance, on sélectionne le point de fonctionnement de ladite variable temporaire pour ledit point de référence.

Selon un troisième mode de sélection, le procédé comporte en outre l'enregistrement du point de fonctionnement de chaque correctif temporaire durant la phase d'apprentissage, le calcul de la valeur moyenne de déviation pour la série des correctifs temporaire de ladite phase d'apprentissage, et en ce que la sélection dudit point de référence consiste à sélectionner le point de fonctionnement du correctif temporaire présentant la déviation la plus éloignée de la valeur moyenne.

L'invention prévoit également une unité de commande de moteur thermique comportant un module de régulation de la richesse et un module de diagnostic de la déviation de richesse, ladite unité étant configurée pour mettre en œuvre le procédé de validation de diagnostic selon l'un quelconque des modes de réalisation précédents.

L'invention prévoit un automobile comportant un moteur thermique piloté par ladite unité de commande.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente la mise en œuvre du mécanisme de validation tel que décrit dans le préambule de description de l'état de la technique ;
[Fig.2] est un logigramme représentant un premier mode de réalisation du procédé de validation selon l'invention pour la phase de mémorisation du point de référence utilisé par le test sous critère de conditions similaires ;
[Fig.3] est un logigramme représentant la suite de la séquence du premier mode de réalisation du procédé de validation selon l'invention spécifiquement lors du test sous critère de conditions similaires ;
[Fig.4] représente des graphiques illustrant le mécanisme de validation d'une fin de défaillance conformément au procédé selon l'invention.

L'invention trouve une application pour les modèles de contrôles d'actionneurs de moteur thermique et en particulier pour le mécanisme de validation d'une fin de défaillance d'un diagnostic d'alerte de déviation de la richesse sous critères de conditions similaires. L'invention est décrite pour une fonction de régulation de la richesse mettant en œuvre une fonction d'apprentissage utilisée pour piloter les modèles de contrôle d'actionneurs.

Dans la présente description, la fonction d'apprentissage met en œuvre une phase d'apprentissage durant laquelle les valeurs de correctifs temporaires convergent vers une valeur finale dans le but de diminuer la déviation de richesse. La fonction d'apprentissage est adaptée à mémoriser des adaptatifs de correction de la richesse, suivant par exemple une matrice des variables de régime et de charge moteur. La valeur de déviation de richesse est estimée à partir de mesure d'une teneur en oxygène d'un gaz d'échappement du moteur, notamment par la sonde présente à l'échappement.

Le terme correctif temporaire signifie que ce sont des valeurs calculées en interne par l'unité de commande du moteur thermique qui ne sont pas appliquées par les modèles d'actionneurs. Pour la détermination de chaque adaptatif de correction, une phase d'apprentissage comprend le calcul d'une série de plusieurs correctifs temporaires jusqu'à ce que la fonction d'apprentissage estime que la valeur du correctif atteint un niveau de confiance suffisant par rapport à un ou des critères, notamment un nombre de mesures minimal, un critère de convergence, un indice de confiance, par exemple.

Le terme adaptatif de correction désigne la valeur finale issue de la convergence de la phase d'apprentissage. Cette valeur est mémorisée et restituée par la fonction d'apprentissage pour le pilotage des modèles d'actionneurs lorsque le moteur entre sur une plage de fonctionnement moteur, en régime et charge notamment, associée à l'adaptatif de correction. Les adaptatifs de correction ajustent les actionneurs de la branche d'admission et/ou la branche d'injection du moteur thermique permettant de contrôler la richesse, soit la commande d'ouverture de vanne d'admission de gaz et/ou la commande de durée d'injection de carburant.

Le procédé de validation de diagnostic est mis en œuvre par une unité de commande comportant un module de régulation de la richesse et un module de diagnostic de la déviation de richesse. L'unité de commande comprend des moyens pour calculer une série de correctifs temporaires à partir de mesures de la déviation de la richesse et déterminer un adaptatif de correction final à appliquer par la fonction de régulation. L'unité de commande comprend en outre des moyens de diagnostic de la déviation de la richesse aptes, en cas de détection d'une défaillance pour un premier adaptatif appliqué par la fonction de régulation, à mémoriser un point de fonctionnement moteur de référence, et en cas de détection d'une fin de défaillance pour un deuxième adaptatif, à valider la fin de défaillance du premier adaptatif en fonction d'un test opéré sous critère de conditions similaires avec ledit point de référence.

L'unité de commande est munie d'un calculateur à circuits intégrés et de mémoires électroniques, le calculateur et les mémoires étant configurés pour exécuter le procédé selon l'invention. Mais cela n'est pas obligatoire. En effet, le calculateur pourrait être externe à l'unité de commande du moteur, tout en étant couplé à cette dernière. Dans ce dernier cas, il peut être lui-même agencé sous la forme d'un calculateur dédié comprenant un éventuel programme dédié, par exemple. Par conséquent, l'unité de commande, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

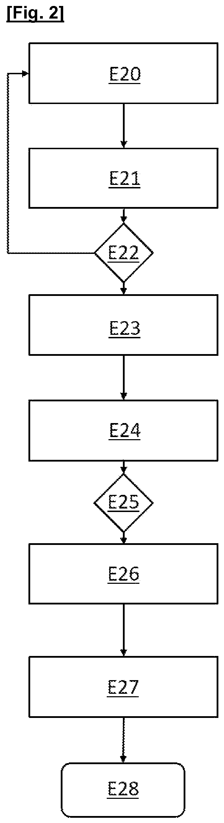

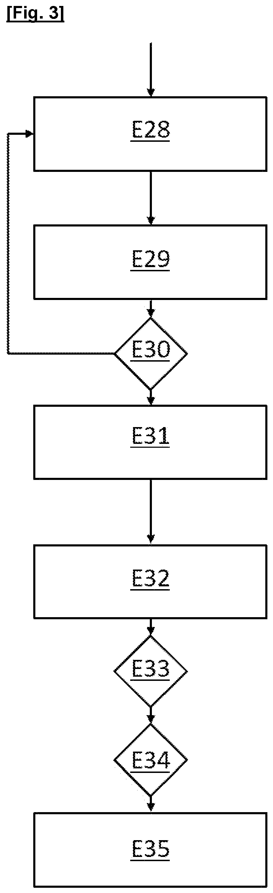

La figure 2 et la figure 3 représentent un premier mode de réalisation du procédé selon l'invention sous la forme d'un logigramme illustrant l'algorithme de la séquence de la validation d'une fin de défaillance sous critère de conditions similaires.

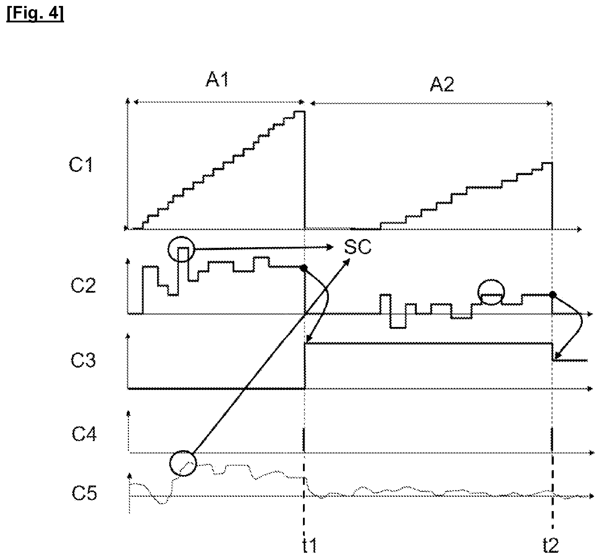

Plus précisément, en référence à la figure 2, le procédé comporte une première phase d'apprentissage A1 réalisant des boucles de calcul des correctifs temporaires de la richesse sur des points de fonctionnement stabilisés en régime et charge moteur. La figure 4 illustre la même séquence et les mêmes graphiques C1 à C5 que ceux de la figure 1, à la différence qu'elle correspond cette fois à l'application du procédé selon l'invention. Chaque boucle comporte une mesure E20 de la richesse, illustrée par la courbe C1 (nombre de mesures) et la courbe C5 (valeur de déviation de la richesse), par exemple par la mesure des sondes à oxygène à l'échappement, puis le calcul E21 d'un correctif temporaire à partir des mesures de déviation de la richesse, illustré par la courbe C2. Chaque correctif temporaire est enregistré en mémoire de l'unité de commande.

A chaque boucle, le procédé comporte une étape d'évaluation de la fin d'apprentissage E22. La fonction d'apprentissage vérifie si la valeur du correctif atteint un niveau de confiance suffisant par rapport à un ou des critères, notamment un nombre de mesures minimal, un critère de convergence, un indice de confiance, par exemple. Si le niveau de confiance n'est pas atteint alors les étapes E20, E21 et E22 sont exécutées à nouveau.

En fin d'apprentissage à l'instant t1, le procédé comporte une étape de pilotage de la fonction de régulation de richesse appliquant un adaptatif de correction, cet adaptatif de correction ayant la dernière valeur de la phase d'apprentissage illustrée par la courbe C3. Le procédé comporte en outre une étape de diagnostic de déviation de la richesse E24 à l'instant t1, consistant à vérifier les valeurs prises par l'ensemble des correctifs temporaires durant la phase d'apprentissage par rapport à un seuil prédéterminé correspondant à une limite de déviation maximale. A une étape E25, si au moins un des correctifs temporaires dépasse le seuil prédéterminé, le diagnostic est positif et une alerte est générée à destination du conducteur.

En outre, pour les besoins du mécanisme de validation de fin de défaillance sous critère de conditions similaires, le procédé selon l'invention va sélectionner comme point de fonctionnement moteur de référence SC celui correspondant au correctif temporaire ayant présenté la déviation de richesse la plus importante. A cet effet, le procédé comporte une étape E26 de comparaison de la valeur de déviation de richesse entre chaque correctif temporaire, ces valeurs étant illustrées par la courbe C5 en référence à la figure 4, et une étape de sélection du point de référence SC, notamment tout ou partie des paramètres moteurs de régime, charge et température eau. Lors de cette étape E26, le point de référence SC est sélectionné en fonction des valeurs de déviation de la richesse de tous les correctifs temporaires de manière à enregistrer le correctif temporaire ayant présenté la déviation de richesse la plus importante, illustré par les flèches sur les courbes C2 et C5. Une fois que l'enregistrement E27 du point de référence SC est exécuté, le procédé de validation passe à une nouvelle phase d'apprentissage.

Ensuite, en référence à la figure 3 et la figure 4, on illustre le procédé pour une deuxième phase d'apprentissage A2 à la suite de laquelle on détecte une fin de défaillance de déviation de richesse et pour laquelle on applique le mécanisme de validation sous critère de conditions similaires utilisant le point de référence SC mémorisé lors d'une séquence antérieure.

A une étape E28, le procédé amorce la deuxième phase d'apprentissage A2 pour laquelle se réalisent à nouveau des boucles de calcul des correctifs temporaires de la richesse sur des points de fonctionnement stabilisés en régime et charge moteur. Chaque boucle comporte les étapes E28 de mesure de la richesse, E29 de calcul d'une correctif temporaire et E30 d'évaluation de la fin d'apprentissage. Ces étapes sont identiques aux étapes E20, E21, E22 décrites en figure 2. Puis, le procédé comporte à nouveau une étape E31 de pilotage de la fonction de régulation de richesse par un adaptatif de correction, la dernière valeur de la phase d'apprentissage à l'instant t2 illustrée par la courbe C3 en figure 4. Le procédé comporte en outre une étape de diagnostic de déviation de la richesse E32 à l'instant t2, consistant à vérifier les valeur prises par l'ensemble des correctifs temporaires durant la deuxième phase d'apprentissage A2 par rapport au seuil prédéterminé. Pour cette séquence, le diagnostic 32 détecte une fin de défaillance pour les correctifs temporaires calculés lors de la phase A2. C'est-à-dire que la valeur de déviation de richesse de tous les correctifs temporaires, courbe C5, est inférieure au seuil prédéterminé.

Ensuite, conformément à l'invention, le procédé comporte une étape de vérification E33 permettant de contrôler qu'un point de référence SC a été mémorisé préalablement. En cas de résultat positif, le procédé comporte une étape de test E34 lors de laquelle on compare chaque correctif temporaire calculé lors de la deuxième phase d'apprentissage A2 avec le point de référence SC pour opérer le test sous critère de conditions similaires. Plus précisément, le test E34 consiste à calculer la différence entre le point de fonctionnement de chaque correctif temporaire avec le point de référence SC. De préférence, cette étape consiste à calculer la différence de régime moteur et/ou de charge moteur et/ou de température eau. Lorsque cette différence est inférieure à un seuil prédéterminé, en régime, charge et/ou température eau, le procédé selon l'invention comporte une étape de validation E35 à l'instant t2 de la fin de la défaillance levée antérieurement lors de la séquence de la figure 2.

Le procédé de validation de diagnostic prévoit en outre un deuxième mode de réalisation où la détection du point de référence SC est réalisé avant l'exécution du diagnostic. Il se différencie du premier mode de réalisation en ce qu'il ne nécessite pas d'enregistrer les paramètres moteurs de chaque correctif temporaire jusqu'à l'exécution du diagnostic. A cet effet, le procédé prévoit l'utilisation d'une variable temporaire permettant, à chaque boucle de calcul d'un correctif temporaire, d'enregistrer le point de fonctionnement du correctif présentant la déviation de richesse la plus importante entre le correctif courant et le correctif de la boucle précédente.

Ce deuxième mode de réalisation du procédé se distingue en ce qu'il comporte, en début d'une phase d'apprentissage, l'initialisation de la variable temporaire à une valeur nulle et qui sera mise à jour à chaque boucle de calcul de la phase d'apprentissage avec le point de fonctionnement du correctif de majeure déviation. Durant la phase d'apprentissage, le procédé comporte à chaque boucle de calcul la comparaison des valeurs de déviation de la richesse du correctif courant et du correctif précédent de la série, et l'enregistrement du point de fonctionnement du correctif ayant la déviation de richesse la plus élevée dans la variable temporaire.

Puis, en fin de la phase d'apprentissage, à l'instant t1 en référence à la figure 4, en cas de détection d'une défaillance, on sélectionne le point de fonctionnement enregistré dans la variable temporaire pour le point de référence SC. Si le diagnostic est négatif, la variable temporaire est réinitialisée à la valeur nulle.

Ce principe peut être également appliqué lors de la deuxième phase d'apprentissage A2 pour le mécanisme de validation. Dans l'hypothèse qu'un point de référence SC a été mémorisé lors d'un diagnostic précédent, à chaque boucle de calcul d'un correctif temporaire, le procédé comporte une étape de comparaison du point de fonctionnement de référence SC avec le point de fonctionnement du correctif temporaire courant. Plus précisément, le procédé opère le test sous critère de conditions similaires identiquement au premier mode de réalisation, c'est-à-dire par calcul des différences de régime, charge et/ou température eau et par comparaison de la ou les différences avec des seuils prédéterminés. En cas de résultat positif du test, on valide temporairement le diagnostic de fin de défaillance. Cette validation n'est toutefois pas encore effective durant la phase d'apprentissage. Puis, lors de l'exécution du diagnostic en fin de la phase d'apprentissage, en cas de détection d'une fin de défaillance, le procédé valide le test sous critère de conditions similaires et annule l'alerte.

On prévoit également un troisième mode de réalisation où la sélection du point de fonctionnement de référence SC est opérée en sélectionnant le correctif temporaire présentant la déviation de richesse la plus éloignée de la moyenne de l'ensemble des correctifs d'une phase d'apprentissage. Plus précisément, en référence à la séquence de la figure 4, le procédé comporte l'enregistrement du point de fonctionnement de chaque correctif temporaire durant la phase d'apprentissage A1 et le calcul de la valeur moyenne de déviation de richesse pour la série des correctifs temporaires de la phase A1. Lors de l'exécution du diagnostic, à l'instant t1 la sélection dudit point de référence SC consiste à sélectionner le point de fonctionnement du correctif temporaire présentant la déviation de richesse la plus décalée de la valeur moyenne, en valeurs inférieures ou valeurs supérieures par rapport à la valeur moyenne de déviation de richesse.

Le procédé permet de respecter les réglementations imposant un mécanisme de validation de fin de défaillance sous critère de conditions similaires pour les diagnostics de déviation de richesse, et évite le maintien de fausses alertes lorsque le point de réalisation du diagnostic n'est pas systématiquement corrélé avec le point d'apparition des défaillances.

## Revendications

1. Procédé de validation d'un diagnostic de déviation de la richesse mis en œuvre par une unité de commande d'un moteur thermique, comportant les étapes suivantes :
- Le pilotage d'une fonction de régulation de la richesse (E23, E31) appliquant un adaptatif de correction, où chaque adaptatif de correction est déterminé en fin d'une phase d'apprentissage (A1, A2), chaque phase d'apprentissage (A1, A2) se succédant et comprenant le calcul (E21, E29) d'une série de correctifs temporaires calculés à partir de mesures de la déviation de la richesse (E20, E28),
- Le diagnostic de déviation de la richesse consistant :
o En cas de détection d'une défaillance (E25) pour un premier adaptatif appliqué par la fonction de régulation, à mémoriser (E27) un point de fonctionnement moteur de référence (SC),
o En cas de détection d'une fin de défaillance (E32) pour un deuxième adaptatif, à valider la fin de défaillance (E35) du premier adaptatif en fonction d'un test (E34) opéré sous critère de conditions similaires avec ledit point de référence (SC),
- Le procédé étant **caractérisé en ce qu'**il comporte en outre la sélection (E26) dudit point de référence (SC) du premier adaptatif parmi la série de correctifs temporaires en fonction de la valeur de déviation de richesse de chaque correctif, et **en ce que** le test (E34) sous critère de conditions similaires est opéré en comparant chaque correctif temporaire du deuxième adaptatif avec le point de référence (SC), ce test comportant, pour chaque correctif temporaire du deuxième adaptatif, le calcul de la différence entre le point de référence (SC) et le point de fonctionnement de chaque correctif temporaire, et la comparaison de ladite différence par rapport à un seuil prédéterminé.

2. Procédé selon la revendication 1, **caractérisé en ce que** la mémorisation (E27) du point de référence (SC) consiste à enregistrer tout ou partie des paramètres instantanés du moteur parmi le régime moteur, la charge moteur et la température eau moteur.

3. Procédé selon les revendications 1 et 2, **caractérisé en ce que** le calcul de la différence de point de fonctionnement consiste à calculer la différence de régime moteur et/ou de charge moteur et/ou de température eau.

4. Procédé selon l'une quelconque des revendications 1 à 3, **caractérisé en ce qu'**une défaillance est détectée lorsqu'au moins un correctif temporaire d'une série de correctifs présente une déviation de richesse supérieure à une limite prédéterminée.

5. Procédé selon l'une quelconque des revendications 1 à 4, **caractérisé en ce qu'**il comporte en outre l'enregistrement du point de fonctionnement de chaque correctif temporaire durant la phase d'apprentissage (A1), et **en ce que** la sélection (E26) dudit point de référence (SC) consiste à sélectionner le point de fonctionnement du correctif temporaire présentant la déviation de richesse la plus élevée parmi les dits correctifs temporaires.

6. Procédé selon l'une quelconque des revendications 1 à 4, **caractérisé en ce qu'**il comporte en outre :
- Durant la phase d'apprentissage (A1) pour chaque correctif temporaire, la comparaison des valeurs de déviation de la richesse du correctif courant et du correctif précédent de ladite série, et l'enregistrement du point de fonctionnement du correctif ayant la déviation de richesse la plus élevée dans une variable temporaire,
- En fin de ladite phase d'apprentissage, en cas de détection (E25) d'une défaillance, on sélectionne le point de fonctionnement de ladite variable temporaire pour ledit point de référence (SC).

7. Procédé selon l'une quelconque des revendications 1 à 4, **caractérisé en ce qu'**il comporte en outre l'enregistrement du point de fonctionnement de chaque correctif temporaire durant la phase d'apprentissage (A1), le calcul de la valeur moyenne de déviation pour la série des correctifs temporaire de ladite phase d'apprentissage, et **en ce que** la sélection dudit point de référence (SC) consiste à sélectionner le point de fonctionnement du correctif temporaire présentant la déviation la plus éloignée de la valeur moyenne.

8. Unité de commande de moteur thermique comportant un module de régulation de la richesse et un module de diagnostic de la déviation de richesse, **caractérisé en ce qu'**elle est configurée pour mettre en œuvre le procédé de validation de diagnostic selon l'une quelconque des revendications 1 à 7.

9. Véhicule automobile comportant un moteur thermique piloté par une unité de commande selon la revendication 8.

## Patentansprüche

1. Verfahren zur Validierung einer Diagnose einer Luft-Kraftstoff-Abweichung, implementiert durch eine Steuereinheit eines Verbrennungsmotors, umfassend die folgenden Schritte:
- Steuern einer Luft-Kraftstoff-Regelungsfunktion (E23, E31) mit einem Korrektur-Adaptivwert, wobei jeder Korrektur-Adaptivwert am Ende einer Lernphase (A1, A2) bestimmt wird, wobei jede Lernphase (A1, A2) aufeinanderfolgt und die Berechnung (E21, E29) einer Reihe temporärer Korrekturwerte umfasst, die aus Messungen der Luft-Kraftstoff-Abweichung (E20, E28) berechnet werden,
- Die Diagnose der Luft-Kraftstoff-Abweichung umfasst:
o Bei Erkennung eines Fehlers (E25) für einen ersten von der Regelungsfunktion angewendeten Adaptivwert das Speichern (E27) eines Referenz-Motorbetriebspunkts (SC)
o Bei Erkennung eines Fehlerendes (E32) für einen zweiten Adaptivwert das Validieren des Fehlerendes (E35) des ersten Adaptivwerts anhand eines Tests (E34) unter einem Kriterium ähnlicher Bedingungen mit dem genannten Referenzpunkt (SC)
- Das Verfahren ist **dadurch gekennzeichnet, dass** ferner die Auswahl (E26) des genannten Referenzpunkts (SC) des ersten Adaptivwerts aus der Reihe temporärer Korrekturwerte in Abhängigkeit vom Luft-Kraftstoff-Abweichungswert jedes Korrekturwerts erfolgt, und dass der Test (E34) unter dem Kriterium ähnlicher Bedingungen durchgeführt wird, indem jeder temporäre Korrekturwert des zweiten Adaptivwerts mit dem Referenzpunkt (SC) verglichen wird, wobei dieser Test für jeden temporären Korrekturwert des zweiten Adaptivwerts die Berechnung der Differenz zwischen dem Referenzpunkt (SC) und dem Betriebspunkt jedes temporären Korrekturwerts sowie den Vergleich dieser Differenz mit einem vorbestimmten Schwellenwert umfasst.

2. Verfahren nach Anspruch 1, **dadurch gekennzeichnet, dass** das Speichern (E27) des Referenzpunkts (SC) das Aufzeichnen aller oder eines Teils der momentanen Motorparameter umfasst, darunter Motordrehzahl, Motorlast und Kühlmitteltemperatur.

3. Verfahren nach den Ansprüchen 1 und 2, **dadurch gekennzeichnet, dass** die Berechnung der Betriebspunktdifferenz die Berechnung der Differenz der Motordrehzahl und/oder der Motorlast und/oder der Kühlmitteltemperatur umfasst.

4. Verfahren nach einem der Ansprüche 1 bis 3, **dadurch gekennzeichnet, dass** ein Fehler erkannt wird, wenn mindestens ein temporärer Korrekturwert einer Reihe von Korrekturwerten eine Luft-Kraftstoff-Abweichung aufweist, die größer als eine vorbestimmte Grenze ist.

5. Verfahren nach einem der Ansprüche 1 bis 4, **dadurch gekennzeichnet, dass** ferner der Betriebspunkt jedes temporären Korrekturwerts während der Lernphase (A1) gespeichert wird und dass die Auswahl (E26) des Referenzpunkts (SC) darin besteht, den Betriebspunkt des temporären Korrekturwerts auszuwählen, der die größte Luft-Kraftstoff-Abweichung aufweist.

6. Verfahren nach einem der Ansprüche 1 bis 4, **dadurch gekennzeichnet, dass** ferner:
- Während der Lernphase (A1) für jeden temporären Korrekturwert die Abweichungswerte des aktuellen Korrekturwerts und des vorhergehenden Korrekturwerts der genannten Reihe verglichen werden und der Betriebspunkt des Korrekturwerts mit der größten Luft-Kraftstoff-Abweichung in einer temporären Variablen gespeichert wird,
- Am Ende der genannten Lernphase, im Falle der Erkennung (E25) eines Fehlers, der Betriebspunkt der genannten temporären Variablen als Referenzpunkt (SC) ausgewählt wird.

7. Verfahren nach einem der Ansprüche 1 bis 4, **dadurch gekennzeichnet, dass** ferner der Betriebspunkt jedes temporären Korrekturwerts während der Lernphase (A1) gespeichert wird, der mittlere Abweichungswert für die Reihe temporärer Korrekturwerte berechnet wird und der Referenzpunkt (SC) durch Auswahl des temporären Korrekturwerts bestimmt wird, dessen Abweichung am weitesten vom Mittelwert entfernt ist.

8. Steuereinheit für einen Verbrennungsmotor mit einem Luft-Kraftstoff-Regelungsmodul und einem Diagnosemodul für die Luft-Kraftstoff-Abweichung, **dadurch gekennzeichnet, dass** sie zur Durchführung des Validierungsverfahrens nach einem der Ansprüche 1 bis 7 eingerichtet ist.

9. Kraftfahrzeug mit einem Verbrennungsmotor, der von einer Steuereinheit nach Anspruch 8 gesteuert wird.

## Claims

1. Method for validating a diagnosis of air-fuel ratio deviation implemented by a control unit of an internal combustion engine, comprising the following steps:
- Controlling an air-fuel ratio regulation function (E23, E31) applying a correction adaptive value, each correction adaptive value being determined at the end of a learning phase (A1, A2), each learning phase succeeding one another and comprising calculating a series of temporary correction values calculated from measurements of the air-fuel ratio deviation (E20, E28),
- The air-fuel ratio deviation diagnosis consisting of:
o In the event of detection of a fault (E25) for a first adaptive value applied by the regulation function, storing (E27) a reference engine operating point (SC),
o In the event of detection of an end of fault (E32) for a second adaptive value, validating the end of fault (E35) of the first adaptive value based on a test (E34) performed under a similar conditions criterion with said reference point (SC),
- Method being **characterized in that** it further comprises selecting (E26) said reference point (SC) of the first adaptive value from the series of temporary correction values depending on the air-fuel ratio deviation value of each correction value, and **in that** the test (E34) is performed by comparing each temporary correction value of the second adaptive value with the reference point (SC), the test comprising calculating the difference between the reference point (SC) and the operating point of each temporary correction value and comparing said difference with a predetermined threshold.

2. Method according to claim 1, wherein storing (E27) the reference point (SC) consists of recording all or part of the instantaneous engine parameters including engine speed, engine load and engine coolant temperature.

3. Method according to claims 1 and 2, wherein calculating the operating point difference comprises calculating the difference in engine speed and/or engine load and/or coolant temperature.

4. Method according to any one of claims 1 to 3, wherein a fault is detected when at least one temporary correction value exhibits an air-fuel ratio deviation greater than a predetermined limit.

5. Method according to any one of claims 1 to 4, further comprising storing the operating point of each temporary correction value during the learning phase (A1), and selecting the operating point of the temporary correction value exhibiting the highest air-fuel ratio deviation.

6. Method according to any one of claims 1 to 4, further comprising:
- During the learning phase (A1), for each temporary correction value, comparing the deviation values of the current correction value and the previous correction value of the series, and storing the operating point of the correction value having the highest deviation in a temporary variable,
- At the end of the learning phase, if a fault (E25) is detected, selecting the operating point stored in said temporary variable as the reference point (SC).

7. Method according to any one of claims 1 to 4, further comprising storing the operating point of each temporary correction value during the learning phase (A1), calculating the mean deviation value for the series of temporary correction values, and selecting the correction value whose deviation is the farthest from the mean value.

8. Control unit for an internal combustion engine comprising an air-fuel ratio regulation module and an air-fuel ratio deviation diagnostic module configured to implement the diagnostic validation method according to any one of claims 1 to 7.

9. Motor vehicle comprising an internal combustion engine controlled by a control unit according to claim 8.
